# FASCICULE DE BREVET EUROPEEN

(11) **EP 4 387 493 B1**
(45) Date de publication et mention de la délivrance du brevet: **01.10.2025**
(21) Numéro de dépôt: 22769736.4
(22) Date de dépôt: 31.08.2022
(51) Int. Cl.: A47J 19/02, A47J 43/07

(54) **APPAREIL DE PRÉPARATION DES ALIMENTS À DÉMARRAGE AUTOMATIQUE**
SELBSTSTARTENDE LEBENSMITTELZUBEREITUNGSVORRICHTUNG
SELF-STARTING FOOD PREPARATION APPARATUS

(30) Priorité: 01.09.2021 FR 2109142
(43) Date de publication de la demande: 26.06.2024
(73) Titulaire: HAMEUR, 2412 Luxembourg (LU)
(72) Inventeur: FEVRE, Loïc, 71410 Sanvignes-les-Mines (FR); BERTRAND, Julien, 71230 Saint Vallier (FR)
(74) Mandataire: Cornuejols, Marine Sophie
(86) Numéro de dépôt international: PCT/EP2022/074211
(87) Numéro de publication internationale: WO 2023/031279

(56) Documents cités:
- FR-A- 1 164 016
- JP-U- S5 050 886

## Description

### DOMAINE TECHNIQUE DE L'INVENTION

La présente invention vise un appareil de préparation des aliments à démarrage automatique. Elle s'applique, en particulier, au domaine des appareils de restauration domestique ou professionnelle.

### ÉTAT DE LA TECHNIQUE

De nombreux appareils de traitement des aliments sont dotés d'un système de démarrage et d'arrêt automatique, que ce soit pour des raisons d'ergonomie et/ou de sécurité. Par exemple, les coupe-légumes sont souvent équipés d'un poussoir couplé à un système de mise en route et arrêt automatique : le disque est mis en rotation seulement lorsque ce poussoir est abaissé, et arrêté lorsque le poussoir est relevé. Toutefois, certaines applications présenteraient un usage peu ergonomique avec la simple détection du déplacement d'une pièce telle que le poussoir. C'est typiquement le cas des presse-agrumes, notamment lorsqu'ils sont équipés d'un levier comportant un poussoir.

En effet dans ce dernier cas, lorsque l'utilisateur dispose le demi-agrume sur le cône de pressage à l'arrêt, puis abaisse le levier portant le poussoir, on cherche à garantir que le demi-agrume soit fermement maintenu entre le poussoir et le cône au moment où ce dernier se met à tourner, et ce quelle que soit la taille de l'agrume traité. S'il est mal maintenu par le poussoir, l'agrume pourrait se mettre à tourner avec le cône, voire être projeté. La même contrainte se pose au moment de l'arrêt. Une simple détection de la position du poussoir ne garantit pas ce maintien, puisque cette position de contact du poussoir et de l'agrume garantissant un maintien ferme, n'est jamais la même selon la taille de l'agrume et au cours du pressage.

Un moyen simple de garantir ce maintien est de détecter l'effort exercé par l'utilisateur. Cette détection d'effort peut se faire au niveau du levier portant le poussoir, comme on le rencontre fréquemment. Toutefois, dans le cas où ce poussoir est rendu amovible pour pouvoir être passé au lave-vaisselle, il est préférable d'intégrer cette détection d'effort aux éléments non-amovibles, en l'occurrence ceux du bloc moteur. Un moyen simple est alors d'autoriser un court déplacement de l'axe d'entraînement portant le cône, en le rappelant par un ressort : l'effort exercé par l'utilisateur se traduit donc par un enfoncement de l'ensemble formé par le cône et l'axe. On rencontre très couramment ce dispositif sur les presse-agrumes dont le cône n'est pas entraîné directement par le moteur, mais par un réducteur déporté dont l'encombrement réduit permet à l'axe d'entraînement de le traverser. La légère translation de l'extrémité inférieure de cet axe, sous l'effet de l'effort exercé par l'utilisateur, pourra alors facilement être détectée.

En revanche, cette réalisation simple ne peut s'appliquer dans le cas d'un moteur entraînant directement le cône. Une réalisation que l'on peut alors rencontrer consiste à intercaler un dispositif d'embrayage entre l'axe d'entraînement du cône et l'axe moteur. Une autre réalisation consiste à faire translater une tige montée sur ressort et traversant l'axe moteur creux sur toute sa longueur pour aller appuyer sur un interrupteur.

Ces deux réalisations présentent cependant un certain nombre de désavantages majeurs : une usure des pièces de frictions et un faible couple transmis dans le premier cas, un perçage complexe de l'axe moteur sur toute sa longueur dans le second cas, et dans tous les cas une complexité et des coûts de fabrication accrus. On notera également, dans le second cas, que le fait de faire appuyer l'extrémité d'une tige en rotation contre un interrupteur fixe occasionne des frottements préjudiciables à la durabilité du dispositif, surtout dans le cas d'une vitesse de rotation relativement élevée du moteur.

On connait lest documents FR1 164 016A et JP S50 50886 qui font partie de l'arrière-plan technologique de l'invention.

Aucune solution connue n'est donc satisfaisante, techniquement, économiquement ou fonctionnellement.

### PRESENTATION DE L'INVENTION

La présente invention vise à remédier à tout ou partie de ces inconvénients.

A cet effet, la présente invention vise un appareil de préparation des aliments, qui comporte :
- un outil de traitement des aliments et
- un moteur électrique dont l'arbre moteur porte l'outil de traitement et forme, avec le rotor, un ensemble rigide mobile tournant autour d'un axe de rotation, le stator et les flasques inférieur et supérieur formant un ensemble rigide fixe, les flasques portant des éléments de guidage en rotation permettant à l'ensemble rigide mobile de tourner dans l'ensemble rigide fixe ; appareil dans lequel la liaison entre l'ensemble rigide mobile et l'ensemble rigide fixe présente de plus un degré de liberté en translation le long de l'axe de rotation,
l'appareil comportant de plus :
- une pièce souple de rappel exerçant une force sur l'ensemble rigide mobile en direction de l'outil de traitement des aliments et
- un moyen de détection sans contact d'un mouvement de translation de l'ensemble rigide mobile dans l'ensemble rigide fixe, configuré pour commander la mise en rotation et l'arrêt du moteur électrique lorsque l'ensemble rigide mobile est déplacé en translation le long de l'axe, par appui sur l'outil de traitement des aliments.

Ainsi, en ajoutant un degré de liberté en translation à la liaison entre l'ensemble rigide mobile et l'ensemble rigide fixe, on utilise la translation de l'ensemble rigide mobile le long de son axe de rotation pour transmettre l'information de l'appui sur l'outil de traitement des aliments. On élimine ainsi les problèmes inhérents aux dispositifs déjà connus.

On note que faire translater l'intégralité du rotor au sein d'un moteur, notamment asynchrone, est contre-intuitif pour l'homme du métier, puisque cela entraîne des conséquences mécaniques et électromécaniques considérées comme néfastes. En particulier, le jeu nécessaire pourrait entraîner une usure plus rapide du moteur au niveau de ses éléments de guidage en rotation, et les poussées magnétiques axiales ne sont pas reprises par la rigidité de l'ensemble comme dans une construction standard.

Dans des modes de réalisation, le moyen de détection comporte une cible solidaire de l'ensemble rigide mobile, et un détecteur de position de la cible, solidaire de l'ensemble rigide fixe.

Dans des modes de réalisation, l'ensemble rigide mobile présente des épaulements qui viennent directement ou indirectement en butée sur les éléments de guidage en rotation, la course du mouvement de translation de l'ensemble rigide mobile dans l'ensemble rigide fixe, depuis le contact d'une butée jusqu'au contact de l'autre butée, étant configurée pour que le détecteur subisse un changement d'état sous l'effet du déplacement de la cible, quel que soit le sens dans lequel cette course est parcourue par l'ensemble rigide mobile.

Ainsi, chaque mouvement de translation intégral du rotor, dans un sens ou dans l'autre, fait changer d'état le détecteur de mouvement du rotor.

Dans des modes de réalisation :
- la cible est un aimant solidaire de l'ensemble rigide mobile et
- le détecteur est un détecteur magnétique qui change d'état sous l'influence du champ magnétique de l'aimant.

Dans des modes de réalisation, le détecteur magnétique est un interrupteur à lame souple.

Un interrupteur à lame souple est un organe électromécanique permettant d'assurer les fonctions de mise en marche et d'arrêt sans avoir recours à des composants électroniques.

Dans des modes de réalisation, au moins un élément de guidage en rotation comporte un roulement, dont la bague extérieure et la bague intérieure ne peuvent pas translater l'une par rapport à l'autre, la bague intérieure étant solidaire de l'ensemble rigide mobile, et la bague extérieure présentant un degré de liberté en translation le long de l'axe de rotation par rapport à l'ensemble rigide fixe, la rotation de cette bague extérieure dans l'ensemble rigide fixe étant limitée par au moins un élément de friction ou de blocage.

Dans des modes de réalisation, au moins un élément de guidage en rotation comporte un roulement, dont la bague extérieure et la bague intérieure ne peuvent pas translater l'une par rapport à l'autre, la bague extérieure étant solidaire de l'ensemble rigide fixe, et l'ensemble rigide mobile présentant un degré de liberté en translation le long de l'axe de rotation par rapport à la bague intérieure, la rotation de cette bague intérieure par rapport à l'ensemble rigide mobile étant limitée par au moins un élément de friction ou de blocage.

Ainsi, le degré de liberté en translation du rotor est obtenu au niveau d'au moins un roulement.

Dans des modes de réalisation, l'élément de friction ou de blocage est respectivement une pièce élastomère, par exemple un joint torique, ou une pièce d'arrêt en rotation, par exemple une clavette.

Dans des modes de réalisation, la pièce souple de rappel est un ressort prenant appui, directement ou indirectement, sur un élément de guidage en rotation.

Ainsi, la force de rappel s'exerce parallèlement à l'axe de rotation du rotor.

Dans des modes de réalisation, l'appareil constitue un appareil de préparation des aliments, destiné à la réalisation de jus de fruits et/ou de légumes à partir de fruits et/ou de légumes entiers ou en morceaux, l'outil de traitement des aliments étant un cône de pressage des fruits et/ou légumes.

### BREVE DESCRIPTION DES FIGURES

D'autres avantages, buts et caractéristiques particulières de l'invention ressortiront de la description non limitative qui suit d'au moins un mode de réalisation particulier du dispositif objet de la présente invention, en regard des dessins annexés, dans lesquels :
La figure 1 représente, schématiquement en vue en coupe, un mode de réalisation particulier d'un moteur et d'un moyen de détection d'appui sur un outil de traitement des aliments, avant cet appui,
La figure 2 représente, schématiquement en vue en coupe, le mode de réalisation particulier d'un moteur et d'un moyen de détection d'appui sur un outil de traitement des aliments illustré en figure 1, pendant cet appui,
La figure 3 représente, en vue en coupe partielle, un premier mode de réalisation particulier d'un moteur mis en œuvre dans un appareil objet de l'invention, avant appui sur un outil de traitement des aliments,
La figure 4 représente, en vue en coupe partielle, le moteur illustré en figure 3, pendant un appui sur un outil de traitement des aliments,
La figure 5 représente, en vue en coupe partielle, un deuxième mode de réalisation particulier d'un moteur mis en œuvre dans un appareil objet de l'invention, pendant un appui sur un outil de traitement des aliments,
La figure 6 représente, schématiquement, une première variante de moyen de détection sans contact d'un mouvement de translation de l'ensemble rigide mobile d'un moteur dans l'ensemble rigide fixe de ce moteur et
La figure 7 représente, schématiquement, une deuxième variante de moyen de détection sans contact d'un mouvement de translation de l'ensemble rigide mobile d'un moteur dans l'ensemble rigide fixe de ce moteur.

### DESCRIPTION DES MODES DE REALISATION

La présente description est donnée à titre non limitatif, chaque caractéristique d'un mode de réalisation pouvant être combinée à toute autre caractéristique de tout autre mode de réalisation.

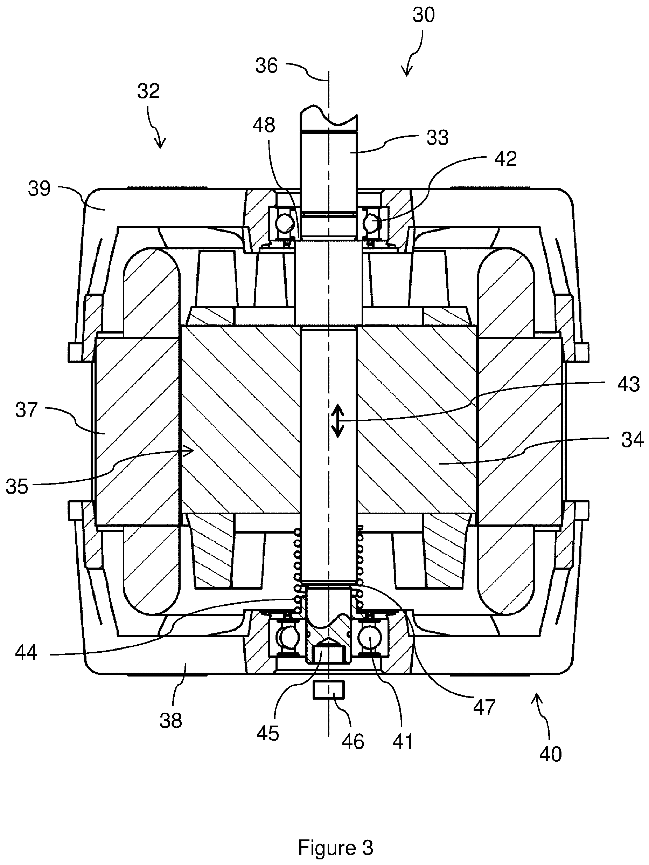

On note, dès à présent, que les figures 3 à 6 sont, chacune, à l'échelle et que les échelles des différentes figures peuvent être différentes.

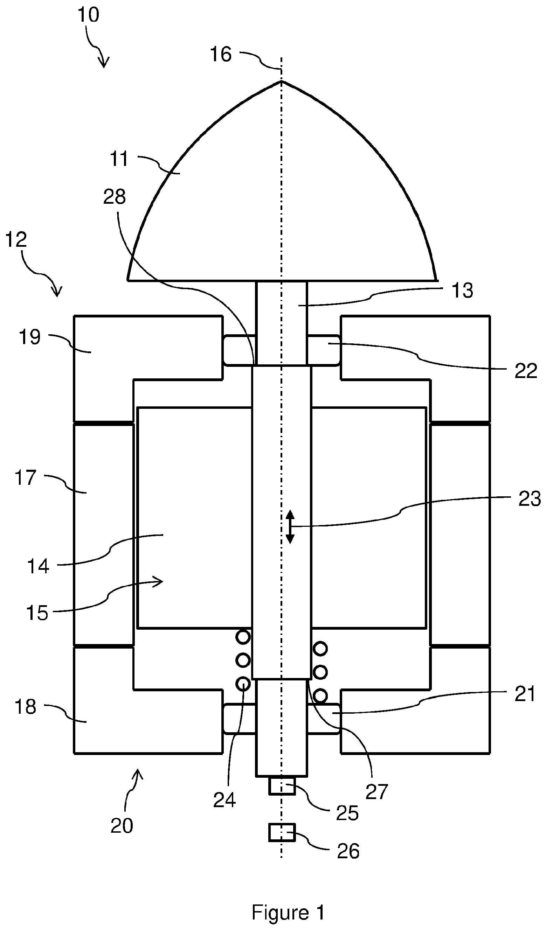

Dans toute la description, on appelle « interne » ou « central » ce qui est proche de ou orienté vers un axe de rotation, 16 ou 36, du moteur et, « externe », ce qui est éloigné ou orienté à l'opposé de cet axe. On appelle « haut » ou « supérieur », ce qui est en haut dans les figures 1 à 7, figures qui correspondent à la configuration de fonctionnement de l'appareil objet de l'invention. On appelle « bas » ou « inférieur », ce qui est en bas dans ces figures. La hauteur du dispositif est définie de bas en haut sur ces figures.

On observe, en figure 1, un appareil 10 de préparation des aliments schématisé, dont, notamment, tous les éléments de bâti, d'alimentation électrique, d'entrée d'aliments et de sortie d'aliments traités ont été exclus.

L'appareil 10 comporte un outil 11 de traitement des aliments et un moteur électrique 12 dont l'arbre moteur 13 porte l'outil 11. L'arbre moteur 13 forme, avec un rotor 14, un ensemble rigide mobile 15 qui tourne autour d'un axe de rotation 16.

Un stator 17 et les flasques inférieur 18 et supérieur 19 forment un ensemble rigide fixe 20. Les flasques 18 et 19 portent, respectivement, des éléments 21 et 22 de guidage en rotation permettant à l'ensemble rigide mobile 15 de tourner dans l'ensemble rigide fixe 20.

La liaison mécanique entre l'ensemble rigide mobile 15 et l'ensemble rigide fixe 20 présente, en plus du degré de liberté en rotation, un degré de liberté en translation le long de l'axe de rotation 16, symbolisé par la flèche 23.

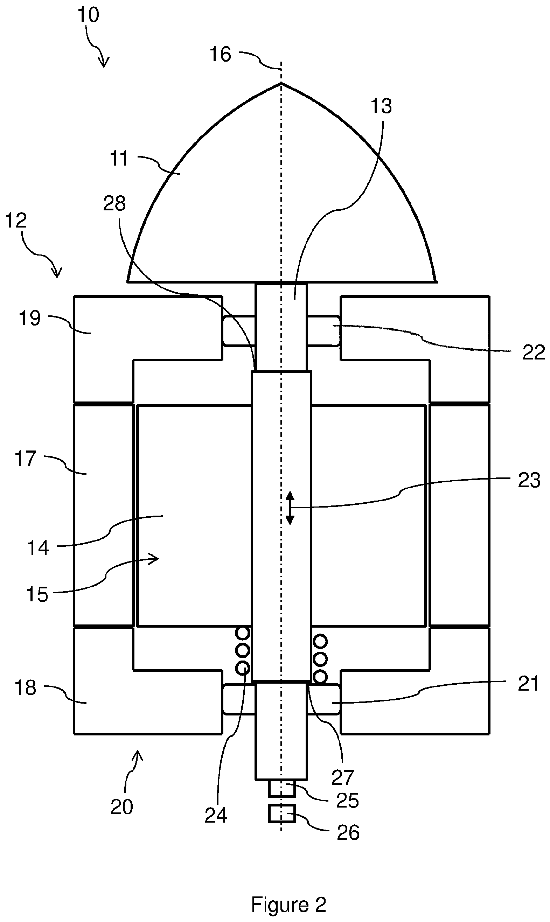

La figure 1 représente la configuration des ensembles rigide mobile 15 et rigide fixe 20 en l'absence d'appui vertical sur l'outil 11. La figure 2 représente la configuration des ensembles rigide mobile 15 et rigide fixe 20 pendant un appui vertical sur l'outil 11. Comme on l'observe en figure 2, lors de l'appui sur l'outil 11, cet outil 11, l'arbre moteur 13 et le rotor 14 se déplacent le long de l'axe 16.

L'appareil 10 comporte aussi une pièce souple de rappel 24 qui exerce une force sur l'ensemble rigide mobile 15 en direction de l'outil 11 de traitement des aliments. Cette pièce souple 24 permet à l'ensemble rigide mobile 15 de remonter lorsque l'appui sur l'outil 11 s'achève.

L'appareil 10 comporte, de plus, un moyen 25 et 26 de détection sans contact d'un mouvement de translation de l'ensemble rigide mobile 15 dans l'ensemble rigide fixe 20. Le moyen de détection 25 et 26 commande la mise en rotation du moteur électrique 12 lorsque l'ensemble rigide mobile 15 est déplacé en translation le long de l'axe 16, par appui sur l'outil 11 de traitement des aliments.

L'ensemble rigide mobile 15 présente des épaulements inférieur 27 et supérieur 28 qui viennent directement ou indirectement en butées, respectivement, sur les éléments de guidage 21, lors d'un appui vertical sur l'outil 11, et 22, en l'absence d'un tel appui. La course du mouvement de translation de l'ensemble rigide mobile 15 dans l'ensemble rigide fixe 20 est définie depuis le contact en butée de l'épaulement supérieur 28 sur l'élément de guidage 22 (figure 1) jusqu'au contact en butée de l'épaulement 27 sur l'élément de guidage 21 (figure 2).

On donne, ci-après, des exemples de modes de réalisation des différents constituants de l'appareil 10.

Par exemple, l'outil de traitement 11 est un cône de pressage de fruits et/ou de légumes dans un presse-agrumes.

Le moteur électrique 12 est, par exemple, un moteur asynchrone.

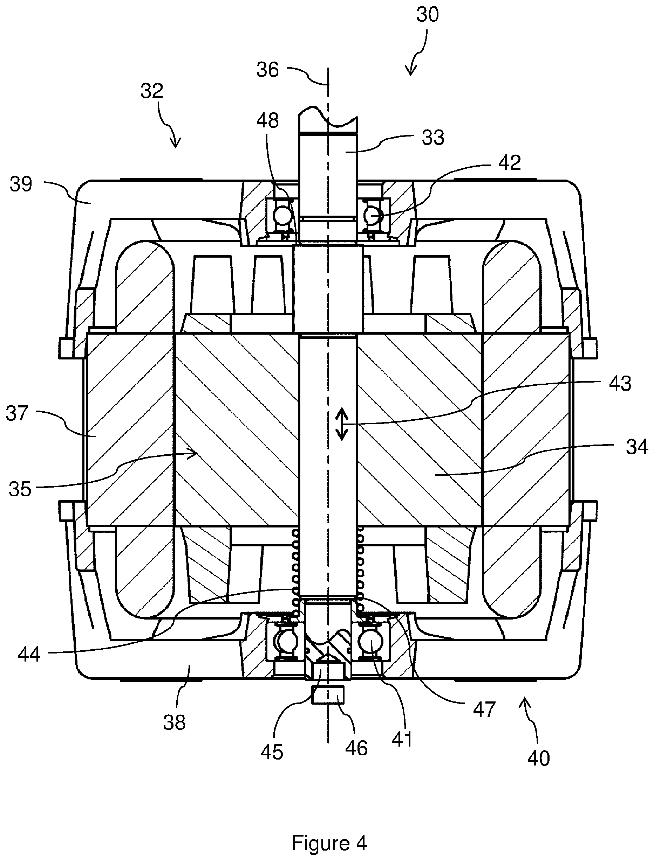

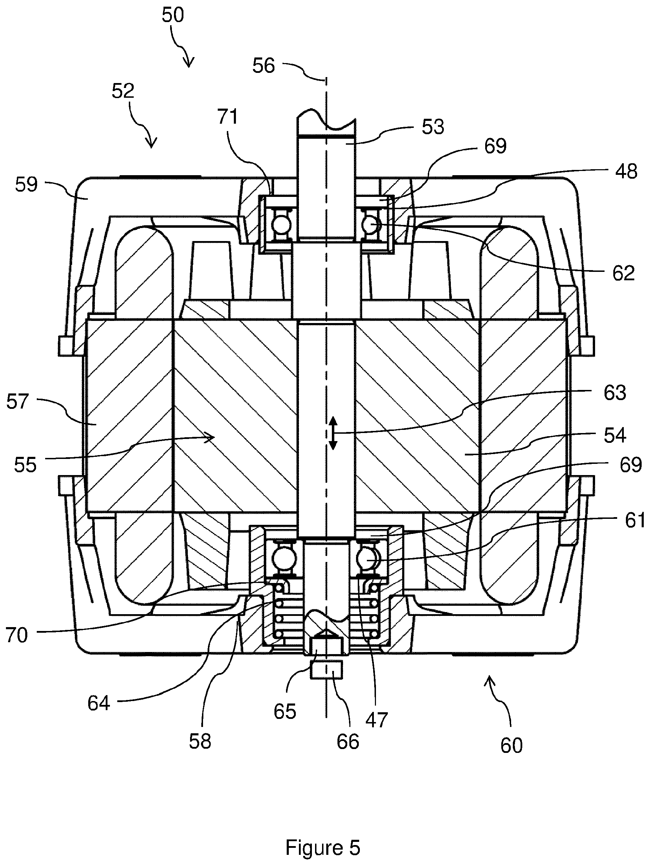

Les éléments 21 et 22 de guidage en rotation sont, par exemple, des roulements à billes ou à rouleaux dont la bague intérieure est ajustée glissante sur l'axe (premier mode de réalisation illustré en figures 3 et 4) ou dont la bague extérieure est ajustée glissante dans leurs logements dans les flasques 18 et 19 (deuxième mode de réalisation illustré en figure 5).

La pièce souple 24 est, par exemple, en métal. Elle peut prendre la forme d'une lamelle ou d'un ressort (comme illustré en figures 1 et 2), par exemple. Elle peut être positionnée en tout endroit entre un élément fixe, par exemple de l'ensemble rigide fixe 20 et un élément de l'ensemble rigide mobile 15.

On retrouve, en figures 3 à 5, les éléments illustrés en figures 1 et 2 à l'exception de l'outil 11 de traitement des aliments, les références numériques étant augmentées de 20 pour les éléments en correspondance fonctionnelle du premier mode de réalisation et de 40 pour le deuxième mode de réalisation.

Dans le premier mode de réalisation de l'appareil 30, partiellement illustré en figures 3 et 4, l'arbre 33 du moteur glisse dans les bagues intérieures des éléments de guidage en rotation 41 et 42, illustrés par des roulements à billes.

Ainsi, dans le mode de réalisation illustré en figures 3 et 4, au moins un élément de guidage en rotation 41 et 42 comporte un roulement, dont la bague extérieure et la bague intérieure ne peuvent pas translater l'une par rapport à l'autre, la bague extérieure étant solidaire de l'ensemble rigide fixe 40, et l'ensemble rigide mobile 35 présentant un degré de liberté en translation le long de l'axe de rotation 36 par rapport à la bague intérieure.

Préférentiellement, la rotation de cette bague intérieure par rapport à l'ensemble rigide mobile est limitée par au moins un élément de friction ou de blocage. L'élément de friction ou de blocage est, par exemple, respectivement une pièce élastomère, par exemple un joint torique, ou une pièce d'arrêt en rotation, par exemple une clavette.

La pièce souple 44 est un ressort hélicoïdal monté entre une pièce de l'ensemble rigide mobile et l'élément de guidage inférieur 41.

L'ensemble rigide mobile 35 présente des épaulements inférieur 47 et supérieur 48 qui viennent directement ou indirectement en butées, respectivement, sur les éléments de guidage 41, lors d'un appui vertical sur l'outil, et 42, en l'absence d'un tel appui. La course du mouvement de translation de l'ensemble rigide mobile 35 dans l'ensemble rigide fixe 40 est définie depuis le contact en butée de l'épaulement supérieur 48 sur l'élément de guidage 42 (figure 3) jusqu'au contact en butée de l'épaulement 47 sur l'élément de guidage 41 (figure 4).

Dans le premier mode de réalisation illustré en figures 3 et 4, le moyen de détection comporte une cible 45 solidaire de l'ensemble rigide mobile 35, et un détecteur 46 de position de la cible 45, solidaire de l'ensemble rigide fixe 40. La cible 45 est, dans cet exemple, un aimant permanent et le détecteur 46 est un détecteur magnétique qui change d'état sous l'influence du champ magnétique de l'aimant 45. Par exemple, le détecteur magnétique 46 est un interrupteur à lame souple (« ILS »).

Le moyen de détection 45 et 46 commande la mise en rotation du moteur électrique 32 lorsque l'ensemble rigide mobile 35 est déplacé en translation le long de l'axe 36, par appui sur l'outil de traitement des aliments.

Dans le deuxième mode de réalisation illustré en figure 5, les éléments de guidage comportent des bagues de glissement 69 rapportées aux flasques inférieur 58 et supérieur 59 dans lesquelles les roulements, respectivement 61 et 62, coulissent parallèlement à l'axe 56 jusqu'à des butées inférieure 70 et supérieure 71 formées dans les flasques 58 et 59, respectivement.

Ainsi, dans le mode de réalisation illustré en figure 5, au moins un élément de guidage en rotation comporte un roulement, 61 et 62, dont la bague extérieure et la bague intérieure ne peuvent pas translater l'une par rapport à l'autre, la bague intérieure étant solidaire de l'ensemble rigide mobile 55, et la bague extérieure présentant un degré de liberté en translation le long de l'axe de rotation 56 par rapport à l'ensemble rigide fixe 60.

Préférentiellement, la rotation de cette bague extérieure dans l'ensemble rigide fixe est limitée par au moins un élément de friction ou de blocage. L'élément de friction ou de blocage est, par exemple, respectivement, une pièce élastomère, par exemple un joint torique, ou une pièce d'arrêt en rotation, par exemple une clavette.

Dans les modes de réalisation illustrés en figures 3 à 5, la pièce souple de rappel est un ressort 44 ou 64 prenant appui, directement ou indirectement, sur l'élément de guidage en rotation 41 ou 61.

Dans le deuxième mode de réalisation illustré en figure 5, le moyen de détection comporte une cible 65 solidaire de l'ensemble rigide mobile 55, et un détecteur 66 de position de la cible 65, solidaire de l'ensemble rigide fixe 60. La cible 65 est, dans cet exemple, un aimant permanent et le détecteur 66 est un détecteur magnétique qui change d'état sous l'influence du champ magnétique de l'aimant 65. Par exemple, le détecteur magnétique 66 est un interrupteur à lame souple (« ILS »).

Le moyen de détection 65 et 66 commande la mise en rotation et l'arrêt du moteur électrique 52 lorsque l'ensemble rigide mobile 55 est déplacé en translation le long de l'axe 56, par appui sur l'outil de traitement des aliments.

Dans les différents modes de réalisation illustrés dans les figures, la course du mouvement de translation de l'ensemble rigide mobile 15, 35 ou 55, dans l'ensemble rigide fixe 20, 40 ou 60, est dimensionnée pour que le détecteur 26, 46 ou 66, subisse un changement d'état sous l'effet du déplacement de la cible 25, 45 ou 65, quel que soit le sens dans lequel cette course est parcourue par l'ensemble rigide mobile 15, 35 ou 55.

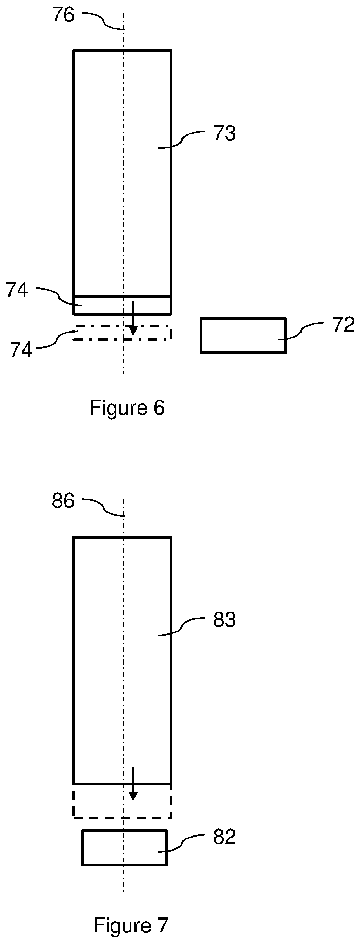

Dans la première variante illustrée en figure 6, le moyen de détection comporte une cible 74 solidaire de l'ensemble rigide mobile et sur l'axe de rotation 76, et un détecteur 72 de position de la cible 74, solidaire de l'ensemble rigide fixe. La cible 74 est, dans cet exemple, une surface réfléchissante et le détecteur 72 est un émetteur-récepteur de rayons lumineux qui change d'état sous l'influence de l'intensité lumineuse réfléchie par la cible 74. La position basse de la cible 74 est représentée en traits discontinus. Le détecteur 72 peut être proche de l'axe de rotation 76 ou, comme illustré en figure 6, décalé sur le côté.

Le moyen de détection 72 et 74 commande la mise en rotation et l'arrêt du moteur électrique lorsque l'ensemble rigide mobile est déplacé en translation le long de l'axe 76, par appui sur l'outil de traitement des aliments.

Dans la deuxième variante illustrée en figure 7, le moyen de détection comporte l'extrémité inférieure de l'arbre métallique 83 de l'ensemble rigide mobile, et un détecteur 82 de position de cette extrémité inférieure 83, solidaire de l'ensemble rigide fixe. Le détecteur 82 est, dans cet exemple, un capteur inductif qui change d'état sous l'influence de la perturbation provoquée par l'arbre métallique 83 sur le champ magnétique généré par le détecteur 82. La position basse de l'extrémité inférieure de l'arbre 83 est représentée en traits discontinus. L'axe de rotation est référencé 86.

Le moyen de détection 82 et 83 commande la mise en rotation et l'arrêt du moteur électrique lorsque l'ensemble rigide mobile est déplacé en translation le long de l'axe 86, par appui sur l'outil de traitement des aliments.

Une application particulière de la présente invention est un appareil de préparation des aliments, destiné à la réalisation de jus de fruits et/ou de légumes à partir de fruits et/ou de légumes entiers ou en morceaux, l'outil de traitement des aliments étant un cône de pressage des fruits et/ou légumes.

Comme on le comprend à la lecture de la description qui précède, dans des modes de réalisation, en supprimant le montage serré des bagues intérieures des roulements sur l'axe tournant, on donne un degré de liberté en translation à l'ensemble axe-rotor. Cet ensemble tournant est alors monté sur ressort, de manière à ce qu'il soit déplacé de façon contrainte vers le bas lorsque l'utilisateur exerce une pression sur l'outil de traitement des aliments.

## Revendications

1. Appareil (10, 30, 50) de préparation des aliments, qui comporte :
- un outil (11) de traitement des aliments et
- un moteur électrique (12, 32, 52) dont l'arbre moteur (13, 33, 53) porte l'outil de traitement et forme, avec le rotor (14, 34, 54), un ensemble rigide mobile (15, 35, 55) tournant autour d'un axe de rotation (16, 36, 56), le stator (17, 37, 57) et les flasques inférieur (18, 38, 58) et supérieur (19, 39, 59) formant un ensemble rigide fixe (20, 40, 60), les flasques portant des éléments (21, 22, 41, 42, 61, 62, 69) de guidage en rotation permettant à l'ensemble rigide mobile de tourner dans l'ensemble rigide fixe ; **caractérisé en ce que** la liaison entre l'ensemble rigide mobile et l'ensemble rigide fixe présente de plus un degré de liberté en translation le long de l'axe de rotation,
- une pièce souple de rappel (24, 44, 64) exerçant une force sur l'ensemble rigide mobile en direction de l'outil de traitement des aliments et
l'appareil étant **caractérisé en ce qu'**il comporte, de plus :
- un moyen de détection sans contact (25, 26, 45, 46, 65, 66, 72, 74, 82, 83) d'un mouvement de translation de l'ensemble rigide mobile dans l'ensemble rigide fixe, configuré pour commander la mise en rotation et l'arrêt du moteur électrique lorsque l'ensemble rigide mobile est déplacé en translation le long de l'axe, par appui sur l'outil de traitement des aliments.

2. Appareil (10, 30, 50) selon la revendication 1, dans lequel le moyen de détection comporte une cible (25, 45, 65, 74, 83) solidaire de l'ensemble rigide mobile (15, 35, 55), et un détecteur (26, 46, 66, 72, 82) de position de la cible, solidaire de l'ensemble rigide fixe.

3. Appareil (10, 30) selon la revendication 2, dans lequel l'ensemble rigide mobile (35, 55) présente des épaulements (27, 28, 47, 48) qui viennent directement ou indirectement en butée sur les éléments de guidage en rotation (21, 22, 41, 42), la course du mouvement de translation de l'ensemble rigide mobile dans l'ensemble rigide fixe (20, 40), depuis le contact d'une butée jusqu'au contact de l'autre butée, étant configurée pour que le détecteur (26, 46) subisse un changement d'état sous l'effet du déplacement de la cible (25, 45), quel que soit le sens dans lequel cette course est parcourue par l'ensemble rigide mobile.

4. Appareil (30, 50) selon l'une des revendications 2 ou 3, dans lequel :
- la cible (45, 65) est un aimant solidaire de l'ensemble rigide mobile (35, 55) et
- le détecteur (46, 66) est un détecteur magnétique qui change d'état sous l'influence du champ magnétique de l'aimant.

5. Appareil (30, 50) selon la revendication 4, dans lequel le détecteur magnétique (46, 66) est un interrupteur à lame souple.

6. Appareil (50) selon l'une des revendications 1 à 5, dans lequel au moins un élément de guidage (61, 62) en rotation comporte un roulement, dont la bague extérieure et la bague intérieure ne peuvent pas translater l'une par rapport à l'autre, la bague intérieure étant solidaire de l'ensemble rigide mobile (55), et la bague extérieure présentant un degré de liberté en translation le long de l'axe de rotation par rapport à l'ensemble rigide fixe (60), la rotation de cette bague extérieure dans l'ensemble rigide fixe étant limitée par au moins un élément de friction ou de blocage.

7. Appareil (30) selon l'une des revendications 1 à 5, dans lequel au moins un élément de guidage (41, 42) en rotation comporte un roulement, dont la bague extérieure et la bague intérieure ne peuvent pas translater l'une par rapport à l'autre, la bague extérieure étant solidaire de l'ensemble rigide fixe (40), et l'ensemble rigide mobile (35) présentant un degré de liberté en translation le long de l'axe de rotation (36) par rapport à la bague intérieure, la rotation de cette bague intérieure par rapport à l'ensemble rigide mobile étant limitée par au moins un élément de friction ou de blocage.

8. Appareil (30, 50) selon l'une des revendications 6 ou 7, dans lequel l'élément de friction ou de blocage est respectivement une pièce élastomère, par exemple un joint torique, ou une pièce d'arrêt en rotation, par exemple une clavette.

9. Appareil (10, 30, 50) selon l'une des revendications 1 à 8, dans lequel la pièce souple de rappel (24, 44, 64) est un ressort prenant appui, directement ou indirectement, sur un élément de guidage en rotation (21, 22, 41, 42, 61, 62).

10. Appareil (10, 30, 50) selon l'une des revendications 1 à 9, qui constitue un appareil de préparation des aliments, destiné à la réalisation de jus de fruits et/ou de légumes à partir de fruits et/ou de légumes entiers ou en morceaux, l'outil de traitement des aliments étant un cône de pressage des fruits et/ou légumes.

## Patentansprüche

1. Vorrichtung (10, 30, 50) zur Zubereitung von Lebensmitteln, bestehend aus:
- einem Werkzeug (11) zur Verarbeitung von Lebensmitteln und
- einem Elektromotor (12, 32, 52), dessen Antriebswelle (13, 33, 53) das Bearbeitungswerkzeug hält und mit dem Rotor (14, 34, 54) eine starre, um eine Drehachse (16, 36, 56) drehbare bewegliche Baugruppe (15, 35, 55) bildet , wobei der Stator (17, 37, 57) und die unteren (18, 38, 58) und oberen (19, 39, 59) Flansche eine starre, feststehende Einheit (20, 40, 60) bilden. Die Flansche tragen Drehführungselemente (21, 22, 41, 42, 61, 62, 69), die eine Drehung der beweglichen starren Baugruppe in der festen starren Baugruppe ermöglichen.
Die Verbindung zwischen der beweglichen starren Einheit und der feststehenden starren Einheit weist außerdem einen Freiheitsgrad in Translationsrichtung entlang der Drehachse auf.
- einem flexiblen Rückstellelement (24, 44, 64), das eine Kraft auf die starre bewegliche Einheit in Richtung des Lebensmittelverarbeitungswerkzeugs ausübt.
Die Vorrichtung umfasst außerdem:
- ein kontaktloses Erfassungsmittel (25, 26, 45, 46, 65, 66, 72, 74, 82, 83) zur Erfassung einer Translationsbewegung der beweglichen starren Einheit in der feststehenden starren Einheit, die so konfiguriert ist, dass sie die Drehung und den Stillstand des Elektromotors steuert, wenn die bewegliche starre Einheit durch Aufliegen auf dem Lebensmittelverarbeitungswerkzeug entlang der Achse verschoben wird.

2. Vorrichtung (10, 30, 50) nach Anspruch 1, wobei die Erkennungsvorrichtung ein Ziel (25, 45, 65, 74, 83) umfasst, das fest mit dem beweglichen starren Bauteil (15, 35, 55) verbunden ist, sowie einen Positionsdetektor (26, 46, 66, 72, 82) für das Ziel, der fest mit dem starren Bauteil verbunden ist.

3. Vorrichtung (10, 30) nach Anspruch 2, wobei die bewegliche starre Baugruppe (35, 55) Schultern (27, 28, 47, 48) umfasst, die direkt oder indirekt an den Drehführungselementen (21, 22, 41, 42) anliegen. Die Bewegungsbahn der Translationsbewegung der beweglichen starren Baugruppe in der feststehenden starren Baugruppe (20, 40) vom Kontakt eines Anschlags bis zum Kontakt des anderen Anschlags ist so konfiguriert, dass der Sensor (26, 46) unter der Wirkung der Verschiebung des Ziels (25, 45) einen Zustandswechsel erfährt, unabhängig davon, in welcher Richtung diese Bewegung von der starren beweglichen Einheit ausgeführt wird.

4. Vorrichtung (30, 50) nach einem der Ansprüche 2 oder 3, wobei:
- das Ziel (45, 65) ein Magnet ist, der fest mit der beweglichen starren Einheit (35, 55) verbunden ist, und
- der Detektor (46, 66) ein Magnetdetektor ist, der unter dem Einfluss des Magnetfelds des Magneten seinen Zustand ändert.

5. Vorrichtung (30, 50) nach Anspruch 4, wobei der Magnetsensor (46, 66) ein Reedschalter ist.

6. Vorrichtung (50) nach einem der Ansprüche 1 bis 5, bei der mindestens ein drehbares Führungselement (61, 62) ein Wälzlager umfasst, dessen Außenring und Innenring nicht relativ zueinander verschiebbar sind. Da der Innenring fest mit der beweglichen starren Baugruppe (55) verbunden ist. Der Außenring weist einen Freiheitsgrad in Translationsrichtung entlang der Drehachse gegenüber der starren Baugruppe (60) auf, wobei die Drehung dieses Außenrings in der starren Baugruppe durch mindestens ein Reibungs- oder Blockierelement begrenzt ist.

7. Vorrichtung (30) nach einem der Ansprüche 1 bis 5, bei der mindestens ein drehbares Führungselement (41, 42) ein Wälzlager umfasst, dessen Außenring und Innenring nicht relativ zueinander verschiebbar sind. Da der Außenring fest mit der starren feststehenden Baugruppe (40) verbunden ist und die bewegliche starre Baugruppe (35) einen Freiheitsgrad in Translationsrichtung entlang der Drehachse (36) gegenüber dem Innenring aufweist, wird die Drehung dieses Innenrings gegenüber der beweglichen starren Baugruppe durch mindestens ein Reibungs- oder Blockierelement begrenzt.

8. Vorrichtung (30, 50) nach einem der Ansprüche 6 oder 7, wobei das Reibungs- oder Blockierelement je ein Elastomerteil, beispielsweise ein O-Ring, oder ein Drehanschlagteil, beispielsweise ein Keil, ist.

9. Vorrichtung (10, 30, 50) nach einem der Ansprüche 1 bis 8, wobei das flexible Rückstellteil (24, 44, 64) ein Federelement ist, das direkt oder indirekt an einem Drehführungsteil (21, 22, 41, 42, 61, 62) anliegt.

10. Vorrichtung (10, 30, 50) nach einem der Ansprüche 1 bis 9, die eine Vorrichtung zur Zubereitung von Lebensmitteln zur Herstellung von Obst- und/oder Gemüsesäften aus ganzen oder in Stücken vorliegenden Obst- und/oder Gemüsesorten bildet, wobei das Lebensmittelverarbeitungswerkzeug ein Presskegel für Obst und/oder Gemüse ist.

## Claims

1. Food preparation device (10, 30, 50), which comprises:
- a food-processing tool (11), and
- an electric motor (12, 32, 52) whose motor shaft (13, 33, 53) bears the processing tool and forms, with the rotor (14, 34, 54), a moving rigid assembly (15, 35, 55) turning around an axis of rotation (16, 36, 56), the stator (17, 37, 57), lower flange (18, 38, 58) and upper flange (19, 39, 59) forming a fixed rigid assembly (20, 40, 60), the flanges bearing rotational guidance elements (21, 22, 41, 42, 61, 62, 69) enabling the moving rigid assembly to turn in the fixed rigid assembly;
**characterised in that** the link between the moving rigid assembly and the fixed rigid assembly also has a degree of freedom in translation along the axis of rotation,
- a flexible return part (24, 44, 64) exerting a force on the moving rigid assembly in the direction of the food-processing tool, and
the device being **characterised in that** it also comprises:
- a means (25, 26, 45, 46, 65, 66, 72, 74, 82, 83) for contactless detection of a translational movement of the moving rigid assembly in the fixed rigid assembly, configured to control the setting in rotation and stopping of the electric motor when the moving rigid assembly is moved in translation along the axis, by pressing on the food-processing tool.

2. Device (10, 30, 50) according to claim 1, wherein the detection means comprises a target (25, 45, 65, 74, 83) secured to the moving rigid assembly (15, 35, 55), and a detector (26, 46, 66, 72, 82) for detecting the position of the target, secured to the fixed rigid assembly.

3. Device (10, 30) according to claim 2, wherein the moving rigid assembly (35, 55) has shoulders (27, 28, 47, 48) which abut directly or indirectly on the rotational guidance elements (21, 22, 41, 42), the path of the moving rigid assembly's translation movement in the fixed rigid assembly (20, 40), from the contact of one stop to the contact of the other stop, being configured such that the detector (26, 46) undergoes a change of state under the effect of the displacement of the target (25, 45), regardless of the direction in which this path is travelled by the moving rigid assembly.

4. Device (30, 50) according to one of claims 2 or 3, wherein:
- the target (45, 65) is a magnet secured to the moving rigid assembly (35, 55), and
- the detector (46, 66) is a magnetic detector, which changes state under the influence of the magnetic field of the magnet.

5. Device (30, 50) according to claim 4, wherein the magnetic detector (46, 66) is a reed switch.

6. Device (50) according to one of claims 1 to 5, wherein at least one rotational guidance element (61, 62) comprises a roller bearing, whose outer ring and inner ring cannot be translated relative to each other, the inner ring being secured to the moving rigid assembly (55), and the outer ring having a degree of freedom in translation along the axis of rotation relative to the fixed rigid assembly (60), the rotation of this outer ring in the fixed rigid assembly being limited by at least one friction or blocking element.

7. Device (30) according to one of claims 1 to 5, wherein at least one rotational guidance element (41, 42) comprises a roller bearing, whose outer ring and inner ring cannot be translated relative to each other, the outer ring being secured to the fixed rigid assembly (40), and the moving rigid assembly (35) having a degree of freedom in translation along the axis of rotation (36) relative to the inner ring, the rotation of this inner ring relative to the moving rigid assembly being limited by at least one friction or blocking element.

8. Device (30, 50) according to one of claims 6 or 7, wherein the friction or blocking element is respectively an elastomer part, for example an O-ring , or a rotation-stop part, for example a pin.

9. Device (10, 30, 50) according to one of claims 1 to 8, wherein the flexible return part (24, 44, 64) is a spring pressing directly or indirectly against a rotational guidance element (21, 22, 41, 42, 61, 62).

10. Device (10, 30, 50) according to one of claims 1 to 9, which constitutes a food preparation device intended to produce fruit or vegetable juices from fruit or vegetables that are whole or in pieces, the food-processing tool being a cone for pressing the fruit and/or vegetables.
